(19) Europäisches Patentamt

European Patent Office

Office européen des brevets

(11) EP 0 745 846 B1

(12) **EUROPEAN PATENT SPECIFICATION**

(45) Date of publication and mention
of the grant of the patent:
**02.04.2003 Bulletin 2003/14**

(51) Int Cl.$^7$: **G01N 30/64**, G01N 27/70,
G01N 27/66

(21) Application number: **96113600.9**

(22) Date of filing: **03.01.1995**

(54) **Improved pulsed discharge systems**

Verbessertes gepulstes Entladungssystem

Système de décharge pulsé amélioré

(84) Designated Contracting States:
**BE CH DE FR GB IT LI NL SE**

(30) Priority: **03.01.1994 US 176968**
**25.02.1994 US 201467**
**25.02.1994 US 201469**
**02.12.1994 US 349039**
**02.12.1994 US 349046**
**02.12.1994 US 349495**

(43) Date of publication of application:
**04.12.1996 Bulletin 1996/49**

(62) Document number(s) of the earlier application(s) in
accordance with Art. 76 EPC:
**95907291.9 / 0 738 388**

(73) Proprietor: **VALCO INSTRUMENTS COMPANY,
INC.**
**Houston, TX 77055 (US)**

(72) Inventors:
• **Wentworth, Wayne E.**
**Pearland, TX 77584 (US)**

• **Stearns, Stanley D.**
**Houston, TX 77055 (US)**

(74) Representative: **Wise, Stephen James et al**
**c/o RAWORTH, MOSS & COOK**
**36 Sydenham Road**
**Croydon, Surrey CR0 2EF (GB)**

(56) References cited:
**EP-A- 0 387 041**          **WO-A-92/15874**

• **PROCESS CONTROL AND QUALITY, vol. 5, no.
2/3, December 1993, ELSEVIER, AMSTERDAM,
NL, pages 193-204, XP000505400 W.E.
WENTWORTH ET AL.: "PULSED-DISCHARGE
HELIUM IONIZATION/ELECTRON
CAPTURE/EMISSION DETECTOR OF
CHLORINATED COMPOUNDS"**
• **CAI H. ET AL: 'Characterisation of the pulsed
discharge electron capture detetor'
ANALYTICAL CHEMISTRY vol. 68, no. 7, 01 April
1996, pages 1233 - 1244**

**Description**

BACKGROUND OF THE DISCLOSURE

The discharge systems of this disclosure utilize a pair of electrodes which, in the preferred embodiment, apply a transverse spark across a gap between the electrodes, the spark preferably being repetitively formed. Bipolar or monopolar discharge can be used. An inert gas flows between the spark electrodes. The spark creates photons of energy which are emitted and are used as described. Particles are charged or energized in the spark gap and energized particles subsequently surrender energy. The inert gas is helium with traces of inert gases. The photon emission or loss of energy assists in identification and measurement of gas chromatographic column (GC hereinafter) eluted peaks from a typical GC source.

Various types of discharge systems are known from a paper:

Process control and quality, vol. 5, No. 2/3, December 1993, Elsevier, Amsterdam, NL, pages 193-204, XP000505400 W.E. Wentworth et al.: 'Pulsed-Discharge Helium Ionization/Electron Capture/Emission Detector of Chlorinated Compounds', from two patent documents WO 92 15874 A (Valco Instruments Company) EP-A-0 387 041 (Varian Associates), and from a paper:

Analytical Chemistry, vol. 68, No. 7, April 1, 1996 pages 1233-1244 H. Cai et al: Characterization of the pulsed discharge electron capture detector.

It is known from the Cai et al paper mentioned above to provide a detector to analyze a compound in a gaseous sample, comprising a closed chamber having a helium source, a flow inlet fitting body at one end of the chamber and an outlet fitting body at the other to enable helium to flow through the chamber from one end to the other, spark-forming electrodes which are spaced apart and means to provide said electrodes with a current forming a spark sufficient to arc thereacross, said spark-forming electrodes being positioned in said chamber to form a spark gap across helium flow through said chamber, means downstream in said chamber from said spark-forming electrodes to inject a gaseous flow of sample into the chamber, a bias electrode and a collector electrode in said chamber for collection of current formed as a result of the spark across the gap wherein the helium flows toward said bias and collector electrodes to enable a current to be formed indicative of the concentration of a particular sample compound in said chamber and the bias and collector electrodes are connected to a detector means to measure the concentration of the sample compound in said chamber by changing current flow. In the detector, dopant gas, mixed with helium, is supplied to the chamber, via a dopant input capillary fitted through the outlet fitting.

STATEMENTS OF INVENTION

The present invention is defined in claims 1 and 5.

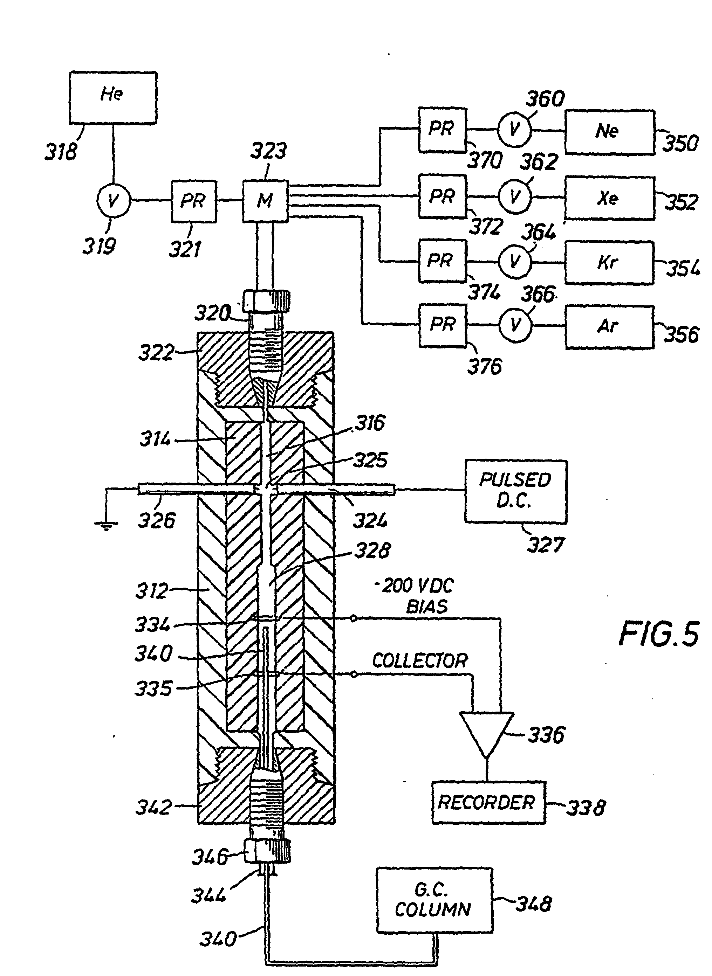

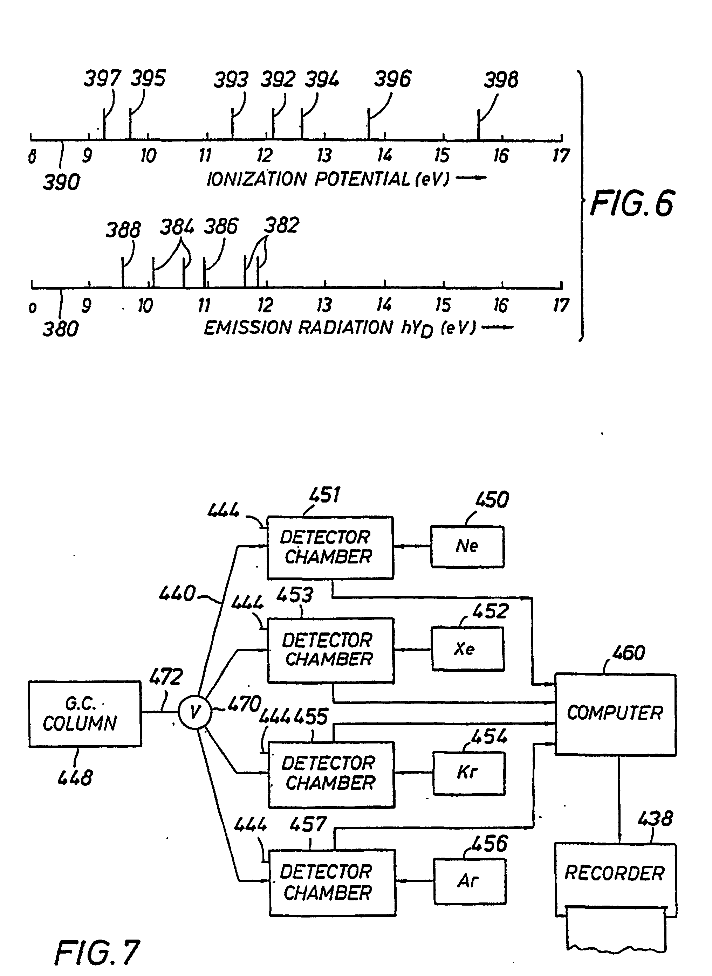

A preferred embodiment of the present invention will now be described by way of example and with reference to Figures 5 and 6. The systems described and shown in the other Figures are presented as background only.

DESCRIPTION OF THE DRAWINGS

Fig. 1 is a sectional view through a spark operated system utilizing helium to test GC column peaks wherein an output signal is formed by ring shaped electrodes;

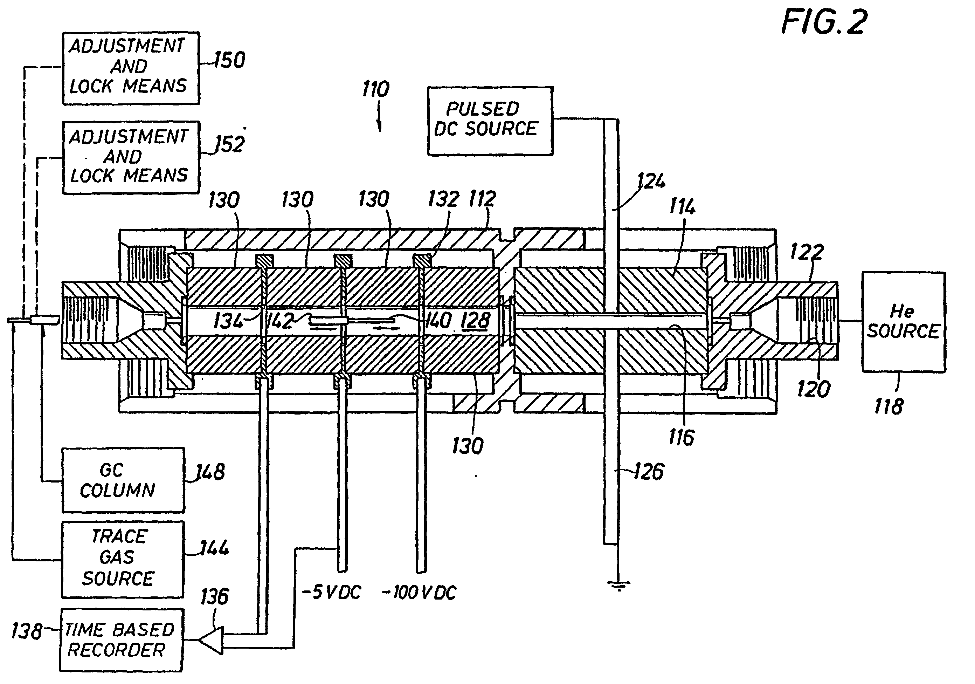

Figure 2 is an alternate system incorporating three ring shaped electrodes with a bias voltage and further including a trace gas input;

Figure 3 is an alternate structure utilizing a sample input downstream of facing electrodes and utilizing a set of spaced rings connected with selected voltages;

Fig. 4 is a timing chart showing the timing sequence of coil charging circuitry for pulse formation;

Fig. 5 illustrates a preferred embodiment of the present invention in which helium is mixed with rare inert gases;

Fig. 6 graphs emission radiation and ionization potential;

Fig. 7 shows several detector chambers provided with rare gases for analysis;

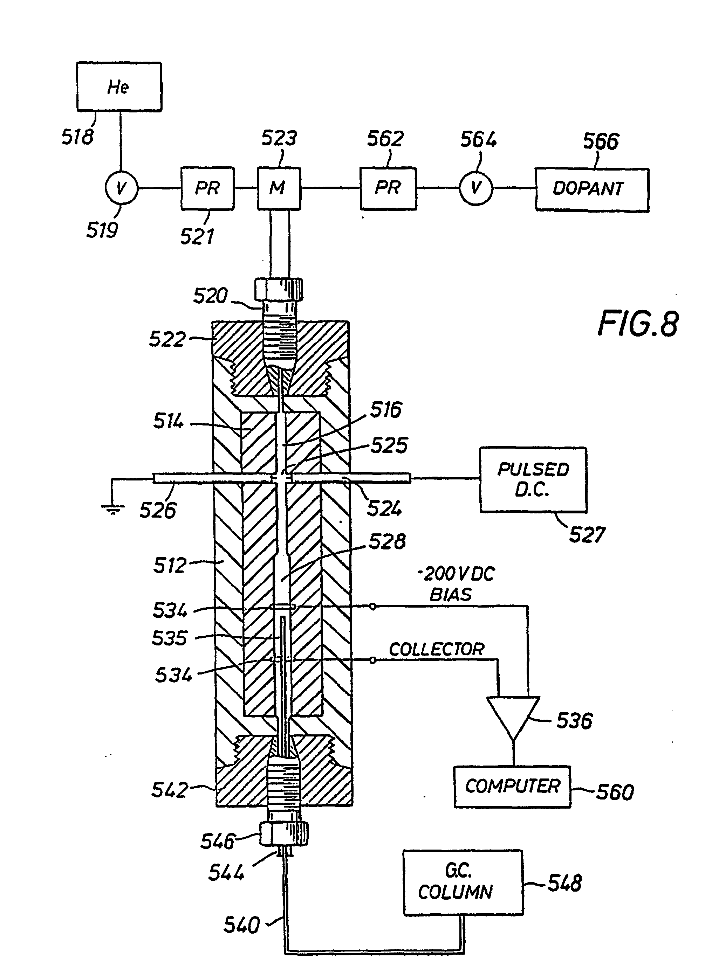

Fig. 8 is an alternate system showing dopant added to the helium;

Figs. 9A and 9B graph certain ratio measurements to determine sample identification;

Fig. 10 is an alternate system showing a round chamber utilizing circular flow;

Fig. 11 is an exploded view of the round chamber in Fig. 10 and electrodes in the chamber;

Fig. 12 is a side view of the round chamber; and

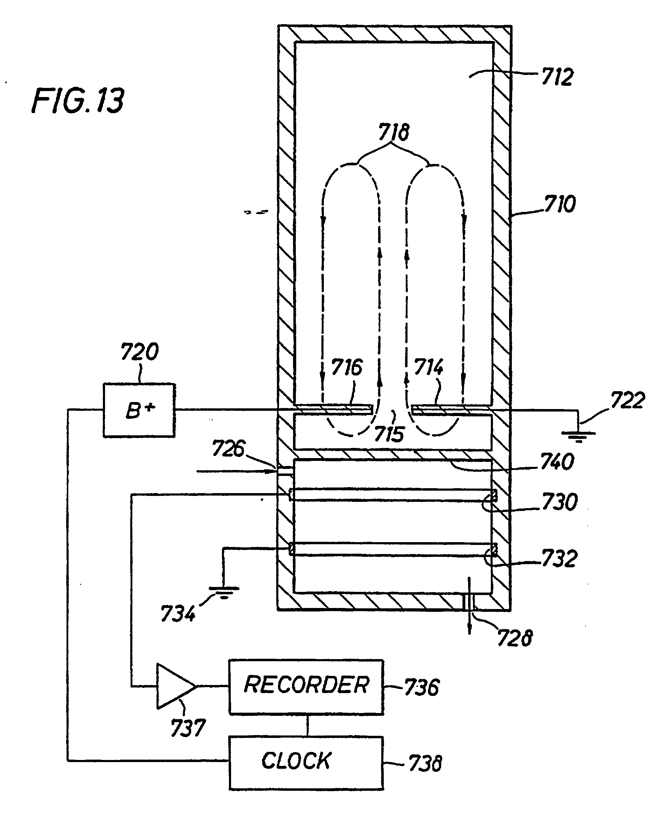

Fig. 13 shows an air analyzer.

## DETAILED DESCRIPTION

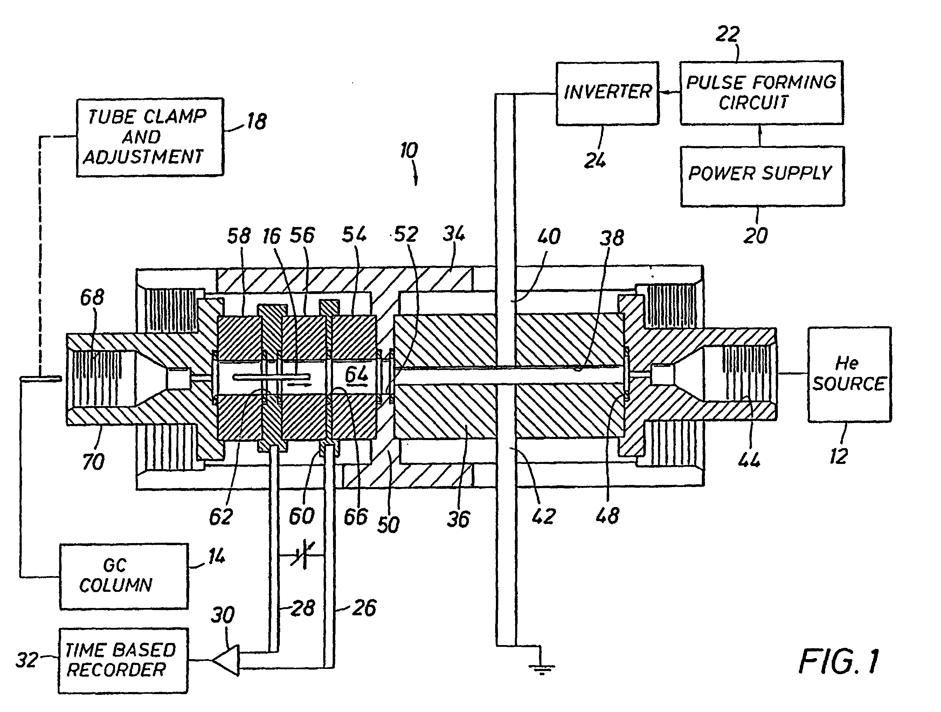

In Fig. 1, a detector **10** uses helium from a helium source **12** regulated above atmospheric pressure flowing from right to left. A GC column **14** provides flow of solvent and eluted sample. GC column **14** connects to a sample injection tube **16** moved and clamped by an adjustment mechanism **18** to a desired location. The power supply **20** provides current for pulse forming circuit **22.** Inverter **24** forms alternating positive and negative pulses. Conductors **26** and **28** are input to a differential amplifier **30** connected to time based recorder **32.**

The detector **10** has an elongate cylindrical shell **34** around an elongate cylindrical sleeve **36** about passage **38.** The passage **38** is between electrodes **40** and **42.**

The housing **34** supports fitting **44** connected with the helium source **12.** Ring **48** seals the body **36.** Transverse web member **50** has a central opening **52** aligned at cylindrical spacers **54, 56** and **58.** Circular electrode **60** forms a full circle around passage **64.** At the surface of the passage **64,** an exposed metal ring **66** connects to the circular electrode **60.** A second circular electrode **62** is wider than the electrode **66.** Sample tube **16** is axially moved to the left or right to vary current at electrometer **30.** The sample tube **16** is inserted through the threaded detail **68** in the end fitting **70.** The tube clamp and adjustment device **18** moves the sample tube **16** in and out to vary sensitivity and performance. The terminals **62** and **66** have an adjustable bias. Photon emission spectra through the passage **38** and **64** interact, and charged particles are either formed or neutralized depending on the sample material creatomh current flow at electrodes **62** and **66.**

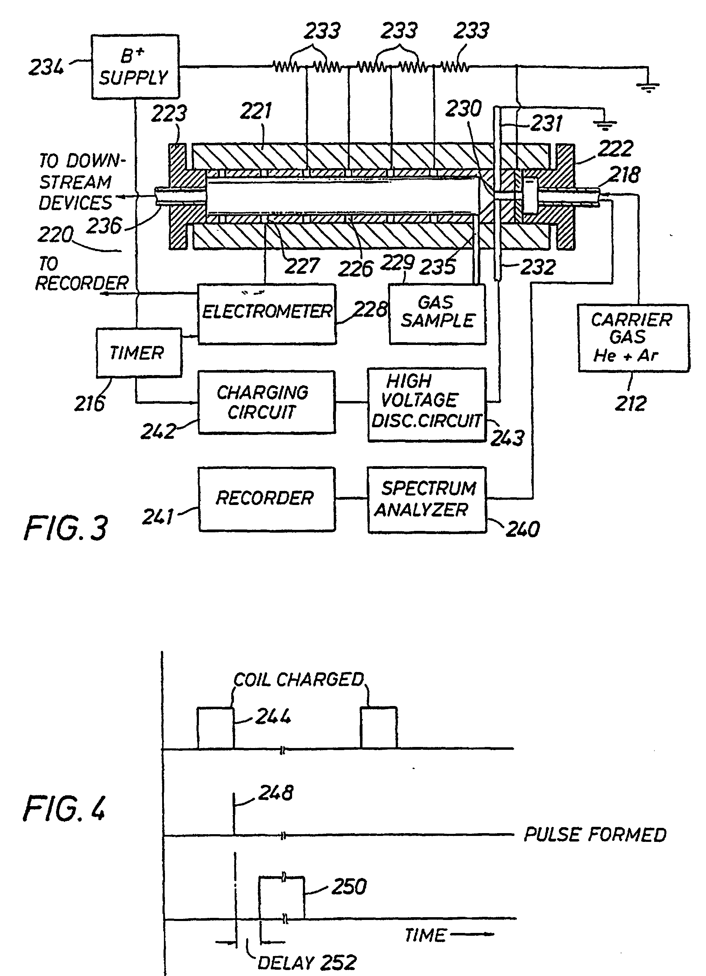

Helium (slightly above atmospheric pressure) flows at about 20-120 milliliters per minute or between ten to thirty times larger than the flow from the tube **16.** An elevated temperature may keep samples in the volatile state. Spark duty cycle is in Fig. 4. At 1000 pulses per second, a pulse is 10 microseconds or less.

## FIGURE 2

An electron capture device (ECD). **110** has an elongate cylindrical housing **112** around cylindrical member **114** defining passage **116.** Helium source **118** connects to a fitting detail **120** in a fitting **122.** Spaced electrodes **124** and **126** terminate in parallel end faces on metal rods having a diameter of about 1/16" spaced approximately 1/16" across the passage **116.** Smaller diameterd of about 0.3 mm can be used. Larger electrodes having sharpened points transverse to the gas flow are permissible.

The passage **128** is defined by a spacer ring **130.** Four similar rings are separated by three rings **132** with an exposed electrode ring **134.** Rings **134** are first, second and third electrodes for operation of the ECD. The first ring has a negative 50 to 250 VDC, and -100 VDC is optimum. The next ring bias is about -5 VDC. The third ring is permitted to float. The last two rings input to an electrometer **136** to measure current output to a time based recorder **138.**

First and second injection tubes are concentric and move axially. Smaller tube **140** introduces a fixed flow of a trace gas **144.** The second concentric tube **142** connects to the GC column **148.** The tubes **140** and **142** are moved in ECD **110** and lock means **150, 152** lock the tubes at specified locations. Arrows indicate tube movement. Dopant gas and GC gas effluent are swept by the larger helium flow to the left past the electrometer electrodes to form a signal.

## FIGURE 3

A detector system **220** utilizes a carrier gas source **212** to provide helium and about 0.3% argon. The carrier gas inlet opening **218** connects with right end cap **222** opposite the left end cap **223.** The end caps plug the tube **221.**

Spark gap **230** is between opposing, parallel faces on two electrodes **231** and **232** provided with a high voltage pulse. Sample gas from a source **229** is injected into the tube **221** at a port **235** from a GC column or the like. Exposed metal rings **226** are spaced along the tube **221** arranged serially downstream. Intermediate rings **226** are tied to series resistors **233** for voltage drops. Ring **227** is connected to an-electrometer **228.**

Electrodes **226** are connected to series resistors **233.** B$^+$ supply **234** voltage (positive or negative) attracts the desired charged particles. B$^+$ voltage is pulsed and is controlled by a timer **216** and proportioned by resistors **233.** The port **236** is aligned with the port **218** which also is an observation port during the spark. Photons impinge on an external spectrum analyzer **240** output to a recorder **241.** Charging circuit **242** connects with a high voltage discharge circuit **243** to provide a timed pulse for firing.

In FIG. 4, the top curve shows the charging pulse **244** for high voltage discharge circuit **243.** That circuit forms an output **248,** a pulse of short duration. Detection is delayed by a specified time **252,** and then a detection enable pulse **250** is formed.

Helium with a trace of argon flows into the spark gap **230** where ions and atoms are excited. Argon resonance lines are at 104.8 and 106.6 nm with corresponding energies of 11.62 and 11.83 eV. Excited argon (Ar*) from the spark gap **230** and sample compound AB from the port **235** are mixed. Possible ionization reactions are:

$$(1) \qquad Ar^* + AB = AB^+ + e^- + Ar$$

$$(2) \qquad Ar^* + AB = A + B^+ + e^- + Ar$$

$$(3) \qquad Ar^* + AB = AB^* + Ar$$

$$\text{where } AB^* = AB + h\gamma$$

$$(4) \qquad Ar^* + AB = A + B^* + Ar$$

$$\text{where } B^* = B + h\gamma$$

$$(5) \qquad Ar^* \rightarrow Ar + h\gamma \ (11.62, 11.83 \ eV)$$

$$h\gamma + AB \rightarrow AB^+ + e^-$$

where $e^-$ denotes a free electron, * denotes an excited state, and $h\gamma$ denotes spectral emission. Equation (3) and (4) reactions form characteristic emission spectra signals for identification and quantification. Equation (1) and (2) reactions produce free electrons measured with electrometer **228**, with the measured current increasing with increasing concentration of compound AB.

Ar* radiation at 11.62 and 11.83 eV will not ionize any compound with an ionization potential above 11.83 eV. Major components of air are nitrogen (15.6 eV), oxygen, (12.08 eV), water (12.6 eV), and carbon dioxide (13.8 eV). Air is not ionized and impurities (pollutants) with ionization potentials below 11.83 eV are ionized.

### FIGURE 5

The preferred embodiment of the invention is described with reference to Figure 5:-

In monitoring for unwanted pollutants ($BF_3$) in a plant making $NO_2$, it is not possible to selectively ionize impurity $BF_3$ without ionizing $NO_2$. An atmospheric sample of air (nitrogen, oxygen, water and carbon dioxide) may mask testing by emissions from air constituents. Selective ionization of helium with less than 1.0% trace rare gas creates a relatively slow diffusing flux of metastable helium which excites the dopant rare gases argon (Ar), krypton (Kr), xenon (Xe), or neon (Ne). The helium-argon gas emission has resonance lines at 104.8 and 106.6 nm. Argon emission therefore avoids ionizing air while ionizing impurities with ionization potentials less than 11.8 eV. A helium-xenon gas has a resonance energy of 9.57 eV which selectively ionizes compounds with lower ionization potential. Likewise, helium-krypton will produce resonance energies of 10.64 and 10.03 eV. Helium-neon mixtures will produce a resonance energy of 10.97. For a mixture of $BF_3$ in $NO_2$, helium-xenon gas is ideally suited in that the ionization potential of $NO_2$ is above the resonance of xenon yet the ionization potential of $BF_3$ is below. BF3 is selectively ionized while $NO_2$ is not ionized.

Referring to FIG. 5, a pulsed capture detector (PCD) has cylindrical housing **312** around cylindrical member **314**. Passage **316** delivers helium from a source **318** through a valve **319** and regulator **321** slightly above atmospheric pressure. The helium flow is into manifold **323** threaded to a detail **320** in a fitting body **322**. Dopant Ne, Xe, Kr and Ar tanks **350, 352, 354** and **356** are connected through valves **360, 362, 364** and **366** and pressure regulators **370, 372, 374,** and **376**. Valve **319** and a selected solenoid valve mix helium and rare gas Ne, Xe, Kr or Ar at the manifold **323** which flows between the electrodes **324** and **326** across the gap **325** and exposed to the spark from the DC pulse circuit **327.**

The flow passage **316** connects downstream with a larger axial hollow passage **328**. Rings **334** and **335** are positioned axially along passage **328**. Ring **334** has a bias voltage and also serves as a first terminal for the electrometer **336**. The bias is about -50 VDC to -400 VDC; and -200 VDC is illustrative. The ring **335** is the second terminal for the electrometer **336** to measure current from the ionization of the trace compounds by the excited dopant. Recorder **338** forms a record of the ionization current measuring the trace compound. The injection tube **340** provides sample gas supplied from the GC column **348.** The injector tube **340** is coaxially centered within the exhaust passage **344** which connects with passage **328** through a fitting **342** like the fitting **322.** A smaller fitting **346** is centered in the fitting **342.**

Doped carrier gas flows from top to bottom while sample gas from the GC column **348** enters through the injector tubes **340.** The sample and carrier gas (with dopant) commingle. Trace compounds are ionized and electrometer **336** measures trace concentration. The carrier gas flow is substantially greater than the sample flow. The commingled and reacted sample and carrier gas is exhausted through the outlet **344.**

Helium and the dopant flow into the PCD through fitting **320** into the spark gap **325** where ions and atoms in the excited state are formed. The dopant "D" is energized and excited to emit photons. Using argon as an example, emission forms resonance lines at 104.8 and 106.6 nm with corresponding energies of 11.62 and 11.83 eV, respectively. Helium containing D* gas mixes with AB from the tube **340.** D* emits the photon $h\gamma_D$ in proximity to compound AB and reactions are:

$$(6) \qquad D^* = D + h\gamma_D$$

$$(7) \qquad h\gamma_D + AB = AB^+ + e^- + D$$

$$(8) \qquad h\gamma_D + AB = A + B^+ + e^- + D$$

$$(9) \qquad h\gamma_D + AB = AB^* + D$$

$$\text{where } AB^* = AB + h\gamma$$

$$(10) \qquad h\gamma_D + AB = A + B^* + D$$

$$\text{where } B^* = B + h\gamma$$

where $h\gamma_D$ denotes photon emission of excited dopant D*. (9) and (10) reactions form specific and characteristic emission spectra, thereby enabling identification and quantification. Equations (7) and (8) describe reactions which produce free electrons measured with electrometer **336** where electron current measures with concentration of compound AB.

The present invention selects the dopant D thereby allowing selected ionization of components of the sample gas. If D = Ar and D* = Ar*, then Ar* radiation is $h\gamma_{Ar}$ = 11.62 and 11.83 eV and will not ionize any compound with an ionization potential above 11.83 eV. Air is not ionized by the Ar* source while air pollutants with ionization potentials below 11.83 eV are ionized. One example comprises air with an impurity such as carbon tetrachloride ($CCl_4$). In another example, $NO_2$ has impurity of $BF_3$. If D = Xe, Xe exhibits a resonance energy at 9.57 eV. The ionization potential of $NO_2$ is 9.75 eV which is above the resonance energy of Kr while the ionization potential of $BF_3$ is 9.25 eV which is below the resonance of Xe. $BF_3$ in the $NO_2$ is selectively ionized while $N0_2$ is not ionized. The electrometer **338** measures trace concentrations of $BF_3$. Ar, Kr and Ne are not suitable dopants since the resonance energies are greater than the ionization potential of $NO_2$; therefore the $NO_2$ as well as the $BF_3$ would be ionized by these dopants.

In the passage **328,** the radiation from the excited dopant is absorbed by the analyte, and those components with ionization potentials less than the resonance energy of the selected dopant are current detected by the collecting electrode **335** and measured by the electrometer **336.**

Fig. 6 shows selected ionization concepts where the axis **380** represents dopant emission radiation $h\gamma_D$ in electron volts (eV). The line **382** locate the Ar emissions at 11.62 and 11.83 eV. The line **386** represents the 10.97 eV emission from Ne and the line **388** represents the 9.57 eV emission from Xe. Finally, emissions **384** are 10.03 and 10.64 from Kr. Ionization potentials are depicted on the axis **390.** The line **392, 394, 396** and **398** represent the ionization potentials of air constituents O, $H_2O$, $CO_2$ and N, respectively. The ionization potential **393** of $CCl_4$ is 11.47 eV. $NO_2$ and $BF_3$ potentials are **395** and **397,** respectively.

For dopant emission photon $h\gamma_D$, any element or compound which on the high energy side of $h\gamma_D$ (that is, to the right of the emission line in Fig. 6) is ionized while any element or compound which falls to the low energy side of $h\gamma_D$ (that is, on the left of the emission line) will not be ionized. Dopant gases are selected based upon two criteria which are (1) the ionization potential of the compound to be measured, and (2) the ionization potentials of other constituents not measured which generate "noise" in the measure of the compound of interest.

In operation, selected dopants are introduced into the carrier gas by the solenoid valve from the reservoir of the selected dopant gas. If Xe is the dopant, solenoid valve **362** allows Xenon from the reservoir **352** to flow through the pressure regulator **372** to the manifold **323.**

### FIGURE 7

Four detector chambers **451, 453, 455** and **457** receive GC column **448** flow from the GC conduit **472** to a valve **470** which "splits" the flow into four parts. Conduits **440** connects to four ionization detectors chambers **451**, **453, 455** and **457**. Four different carrier gas sources **450, 452, 454** and **456** flow into the detector chambers. Gas constituents are excited and commingled with the sample gas splits. The excited carrier gases ionize the sample, generating an ionization current. Mixtures of carrier and sample gas are vented from each chamber through a port **444.** Ionization currents generated at chambers **451**, **453**, **455** and **457** are transferred to the computer **460.** Measurements processed at the computer **460** yield identity and concentrations of the sample gas. Results from the computer go to a recorder **438.** The number of detectors can be varied. In analyzing a large number of different compounds, accuracy and precision may be maximized by using more detectors.

### FIGURE 8

The pulsed discharge photoionization capture detector (PDPID) has a long cylindrical housing **512** which contains a cylindrical member **514** which is axially hollow at **516.** The helium source **518** flows through a valve **519** and regulator **521** to deliver helium at a pressure slightly above atmospheric. Manifold **523** via fitting **520** connects to a fitting **522** at the body **512** of the PDPID. Reservoir **566** is connected through valve **564** and pressure regulator **562** to the manifold **523.** By opening valves **519** and **564,** helium and dopant gas flow to the manifold **523** and into the axial passage **516** and between the electrodes **524** and **526.**

The electrodes **524** and **526** are about 1/16" with spaced end faces approximately 1/16" across passage **516**. Electrodes **524** and **526** are electrically insulated from the PDPID. The electrode **526** is grounded while the electrode **524** is provided with a high voltage pulse of short duration by the DC source **527.** The two terminals **524** and **526** form a sharply fixed, narrowly constrained spark so that the spark does not dance around the two electrode faces, and remains a straight line.

Carrier gas is introduced into the PDPID from top to bottom. Sample gas from the GC column **548** enters the passage **528** through the injector tube **540** so that sample and carrier gas excited by the spark commingle. Compounds are ionized producing a response across the exposed rings **534** and **535** input to the electrometer **536** indicative of the sample and concentration. After commingling and reacting, the mixture of sample and carrier gas is swept from the passage **528** of the PDPID and exhausted through the outlet **544.** The outlet is supported in the fitting **546** in the end cap **542.** The GC gas flow input is the tube **535.**

Helium and a dopant gas flows into the PDPID through fitting **520** into the spark gap **525** where ions and atoms in the excited state. Dopant "D" is energized and excited. The excited dopant passes from the spark gap **525** through passage **516** into the passage **528** of the PDPID. Dopant D in the excited state emits photons. Using argon as an example dopant, emission resonance lines at 104.8 and 106.6 nm have energies of 11.83 and 11.62 eV, respectively. By mixing dopant D with helium and exciting the gas at the gap **525,** excited dopant D* is created. D* decays within approximately 5 microseconds after excitation. Some photons from decay pass through channel **516** into channel **528.** Sample AB is injected into the channel **528** and exposed to photons h $\gamma_D$ resulting from the decay of D*. Flow of carrier and sample gas is from top to bottom to the outlet **544.** Reactions are exemplified in Equations (1) to (10) above.

Table 1 summarizes emission spectra from helium, argon and krypton doped helium. Other gas mixtures can be effectively used, and the data primarily support the examples presented.

TABLE 1

| EMISSION SPECTRA FROM HELIUM AND ARGON AND KRYPTON DOPED HELIUM | | |
|---|---|---|
| ACTIVE SPECIES | WAVELENGTH (nm) | ENERGY (eV) |
| He | 388 | |
| $He_2$ | 70-90 | 13.5-17.7 |
| Ar | 104.8 | 11.83 |
| Ar | 106.6 | 11.62 |
| Kr | 116.5 | 10.64 |
| Kr | 123.6 | 10.03 |
| $Ar_2$ | 121-133.6 | 9.28-10.24 |

TABLE 1   (continued)

| EMISSION SPECTRA FROM HELIUM AND ARGON AND KRYPTON DOPED HELIUM | | |
|---|---|---|
| ACTIVE SPECIES | WAVELENGTH (nm) | ENERGY (eV) |
| $Kr_2$ | 139.7-152.8 | 8.11-8.87 |

The sample gas maybe split and passed through multiple detectors. Electrometer output current with helium as a carrier gas, $C_{He}$, is measured and stored within the computer **560.** The electrometer outputs $C_{He+Ar}$ and $C_{He+Kr}$ from the second and third detectors, respectively, are measured simultaneously and likewise stored within the computer **5 6 0 .** The ratios

$$(11) \qquad R'_{Ar}=C_{He+Ar}/C_{He}$$

and

$$(12) \qquad R'_{Kr}=C_{He+Kr}/C_{He}$$

are computed. The system is first "calibrated" by measuring the ratios $R'_{Ar}$ and $R'_{Kr}$ using a calibration gas comprising a known amount of benzene. All other constituents exhibit ionization potentials above the highest emission level of the carrier gas and, therefore, do not contribute to the electrometer current readings of the detectors. The ratios defined in equations (11) and (12) for benzene gas are $R''_{Ar}$ and $R''_{Kr}$, respectively. Ratios measured using the unknown sample, normalized to a corresponding reading for benzene of 100, are computed from the equations

$$(13)\ R_{Ar} = 100\ (R'_{Ar}/R''_{Ar})$$

and

$$(14)\ R_{Kr} = 100\ (R'_{Kr}/R''_{Kr})$$

Table 2 lists normalized ratios $R_{Kr}$ and $R_{Ar}$ for selected compounds. The tabulation is presented for illustration only. If an unknown sample gas $R_{Ar}$ is measured at 77.8 +/- 0.8, the designated uncertainty is attributed to random errors. In Table 2, the compounds $C_3H_7NO_2$ ($R_{Ar}$ = 78.3) and $CH_3CHO$ ($R_{Ar}$ = 77.9) and 1-pentene ($R_{Ar}$ = 77.6) all fall within the uncertainty of +/- 0.8. With only two detectors, the unknown compound could not be uniquely identified from ionization detection measurements. Assume that $R_{Kr}$ is 37.4 +/- 0.4. From Table 2, only 1-pentene is within the range of values of $R_{Ar}$ and RKr since the tabulated values of $R_{Kr}$ for $C_3H_7NO_2$ and $CH_3CHO$ are 0.74 and 43.4, respectively. The unknown compound is, therefore, identified as 1-pentene. The concentration of 1-pentene is from $C_{Ar}$ or $C_{Kr}$ standardized with a calibration gas containing 1-pentene.

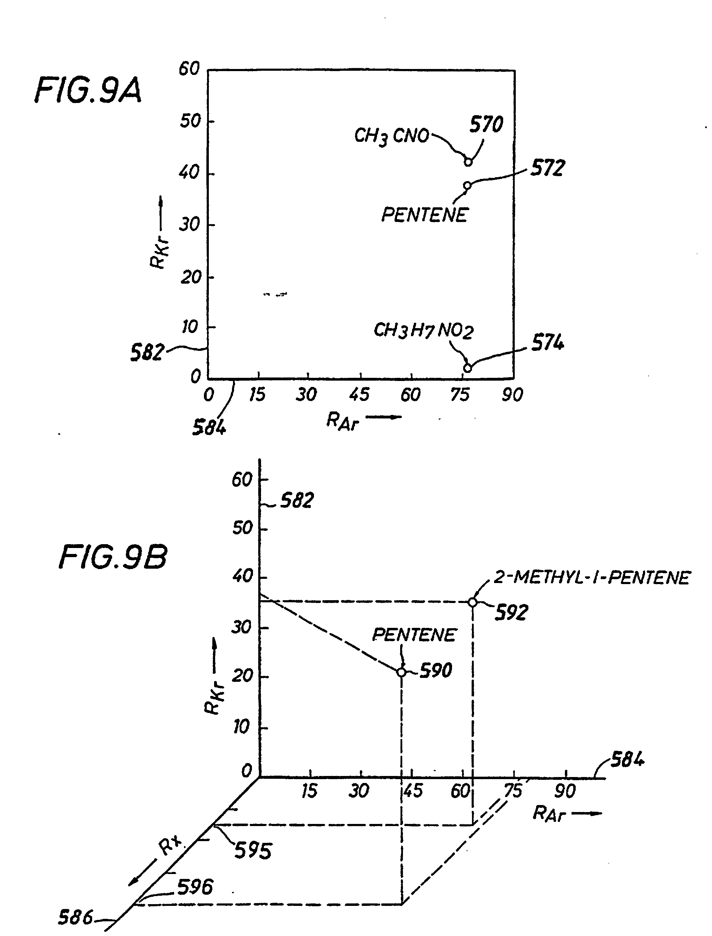

Computations are performed in real time with the computer **560.** The identification analysis is depicted graphically in Fig. **9A.** $R_{Ar}$ is plotted on the axis **584** and $R_{Kr}$ is plotted on the axis **582.** Corresponding "coordinates" for 1-pentene, $C_3H_7NO_2$ and $CH_3CHO$, with expected systematic uncertainties for each value, are taken from Table 2 and depicted as circles **572, 574** and **570**, respectively. Should $R_{Ar}$ and $R_{Kr}$ plot within any circle of uncertainty, the unknown compound is thereby identified. In the previously discussed example, the measured values of $R_{Ar}$ and $R_{Kr}$ plot within the circle **572** and therefore the unknown compound is identified as 1-pentene.

TABLE 2

| NORMALIZED RESPONSE RATIOS $R_{Ar}$ AND $R_{Kr}$ FOR SELECTED COMPOUNDS | | |
|---|---|---|
| COMPOUND | $R_{Ar}$ . | $R_{Kr}$ . |
| $CS_2$ | 204.0 | 38.3 |
| 1-hexene | 81.7 | 41.8 |
| $C_3H_7NO_2$ | 78.3 | 0.74 |
| $CH_3CHO$ | 77.9 | 43.4 |

TABLE 2   (continued)

| NORMALIZED RESPONSE RATIOS $R_{Ar}$ AND $R_{Kr}$ FOR SELECTED COMPOUNDS | | |
|---|---|---|
| COMPOUND | $R_{Ar}$ . | $R_{Kr}$ . |
| 1-pentene | 77.6 | 37.4 |
| 2-methyl-1-pentene | 76.0 | 35.3 |
| heptane | 76.0 | 4.58 |
| 1-butene | 70.5 | 24.3 |
| butane | 62.4 | 1.13 |
| n-$C_3H_7OH$ | 60.9 | 10.2 |

As a second example, assume that $R_{Ar}$ is measured to be 76.8 +/- 1.0 and $R_{Kr}$ is measured to be 36.0 +/- 2.0. The illustrative uncertainties are greater that usual. From Table 2, it is not possible to define uniquely the unknown compound as 1-pentene or 2-methyl-1-pentene since both fall within the uncertainty ranges. An additional detector with gas dopant helps so that the normalized ratio from this detector, denoted as "$R_X$", delineates between the two compounds in question. The data using four detectors (which yields three ratios) is depicted graphically in Fig. **9B**. Coordinates representing 1-pentene and 2-methyl-1-pentene, with spheres representing the systematic uncertainty of the system, are depicted as **592** and **590,** respectively. $R_{Kr}$ and $R_{Ar}$ are plotted along the axes denoted by the numerals **582** and **584,** respectively. The ratio from the additional detector, $R_X$, is plotted along the axis denoted by **586** and is in arbitrary units. Hypothetical values for $R_X$ 1-pentene and 2-methyl-1-pentene, (for purposes of illustration), are denoted by the numerals **596** and **595,** respectively. Should values of $R_{Ar}$, $R_{Kr}$ and $R_X$ for an unknown plot within the sphere of uncertainty for either compound, the unknown compound is identified. The graphical interpretation is presented only for purposes of illustration and is easily adapted for computer interpretation.

**FIGURE 10**

The circular detection system **620** utilizes a carrier gas source **612** connected to the detector valve **613.** The circular detector **620** in a representative GC system utilizes a sample source **611** connected with the loading valve **613.** They provide a carrier gas flow to a GC column **615.** System timer **616** controls operation. Compounds supplied with the flowing carrier gas flow through the valve **613** to the GC column **615.** There is a tangential inlet port **618** to the detector interior to sustain rotational motion and discharge through a vent port **619.** The collecting electrode terminal **621** is connected to the electrometer **628.** The terminal **621** connects with one ring electrode while the terminal **622** connects with a bias electrode. A B+ supply **634** provides power. One output from the B+ supply **634** is to the timer **616** and to a charging circuit **642.** The charging circuit operates with a high voltage discharge circuit **643** to form an output pulse having a controlled polarity, controlled width and, specified current flow. This is input at a first terminal **624** opposite a ground terminal **625.** The terminals **624** and **625** provide the DC spark in the detector **620.** One of the two terminals is hollow for delivery of helium from a helium source **626.**

A window **627** passes light to be emitted from the spark, and observed by a spectrum analyzer **640.** The analyzer **640** provides an output signal to the recorder **641.** Helium is delivered at the center of the detector **620** through the hollow electrode **624** from the reservoir **626.** Dopant may be optionally introduced from the reservoir **626'** into the helium flow.

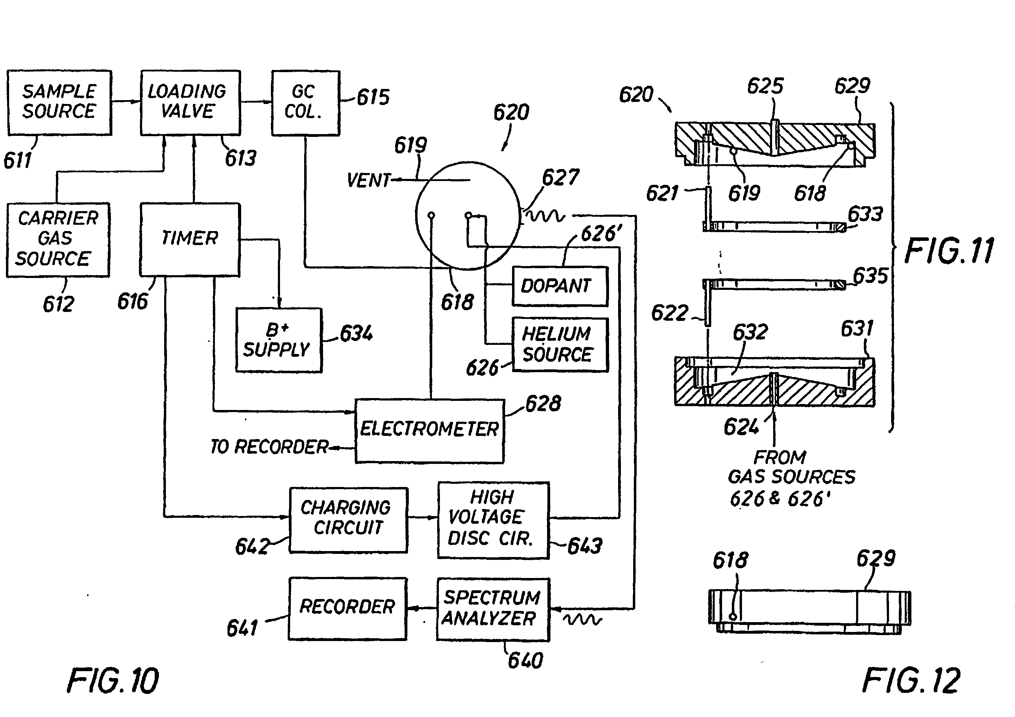

The detector housing **620** has two cylindrical shell portions. One shell portion **629** incorporates a circular protruding lip which enables the shell half **629** to join with a second shell portion **631.** The shell portions **629** and **631** join with an overlapping lip arrangement so that a chamber **632** is formed. The collecting electrode **621** is connected to a ring **633** while the similar ring **635** is the bias electrode. The housing portions **629** and **631** are formed of a material which is not an electrical conductor. In Fig. **12,** the shell portion **629** is provided with a tangentially located inlet passage **618** to introduce gas flow at the interior tangential edge of the cylindrical chamber. The port **619** is a vent located radially inwardly.

**FIGURE 13**

The numeral **710** identifies the gas sampling apparatus formed of an insulating material. The body **710** is divided into two chambers by the partition or "window" **740** forming the upper spark chamber **712** which is leak proof to the surrounding atmosphere and a lower sample chamber. Two round and equal diameter electrodes. **714** and **716** protrude inwardly from the body **710** of the detector. The spark gap **715** within the spark chamber **712** has an insulating material at the faces of the electrodes **714** and **716** sufficiently thick to physically isolate the electrodes from the environs of the interior of spark chamber **712** yet sufficiently thin to allow the generation of a pulsed DC spark across the spark gap **715.** Electrode **716** is electrically connected to B+voltage power supply **720** while the electrode **714** is grounded at **722.** The voltage applied to the electrode pair is timed by a clock **738.** The spark chamber **712** is filled with helium and a trace of krypton.

Sample gas enters the sample chamber through a port **726** and exits the chamber through the port **728.** A small pump delivers sample gas. The sample chamber contains circular electrodes **730** and **732** recessed within the chamber walls and exposed to the interior of the chamber. Electrode **732** is grounded at **734.** The electrode **730** is connected to an amplifier **737** and then to the recording device **736.** A clock **738** controls the applied positive or negative voltage and times the recorder. The electrode **732** has the requisite voltage to attract desired charged particles within sample chamber. The window **740** separating the spark chamber **712** and the sample chamber is a thin membrane of magnesium fluoride ($MgF_2$) or lithium fluoride (LiF). The material and dimensions are selected so that photoemissions at the desired energy levels experience minimal absorption entering into the sample chamber. The discharge heats the gas in the spark gap **715.** Heated relatively buoyant gas in the spark path rises in the closed spark chamber **712** where it is cooled by mingling with cooler gas. Simultaneously, cooler gas replaces the heated gas at the spark gap **715.** The net result is circulation within the closed spark chamber **712** as depicted by the broken lines **718.** Convective circulation constantly supplies "fresh" gas to the spark gap **715.**

Krypton in the excited state emits photons at 116.5 and 123.6 nanometers (nm) with corresponding energies of 10.03 and 10.64 electron volts (eV), respectively. This radiation passes through the window membrane **740** and into the sample chamber where it interacts with the sample gas. Each spark creates a fresh supply of Kr* which, in turn, decays to the ground state by the emission of 10.03 eV and 10.64 eV photons. The spark generation system in cooperation with the helium-krypton gas mixture acts as a self replenishing source of 10.03 eV and 10.64 eV radiation.

Sample flow is preferably continuous although discrete samples may be taken. In air monitoring, small concentrations of pollutant compounds AB and air are exposed to the photon flux of energies 10.03 and 10.64 eV from the spark chamber **712** through window membrane **740.** This photon flux ionizes the compound AB. Free electrons are collected at the electrode **730** which is at a positive potential. Electrode 732 is at ground to retard ionic recombination and to repel electrons. The free electron current from the electrode 730 is recorded by the recorder 736 with the current proportional to the concentration of AB. Electron current is, therefore, an analytical measure of concentration.

Recall that Kr* emits radiation at 10.03 and 10.64 eV. This radiation will not ionise any compound with an ionisation potential above 10.64 eV. Major constituents of air are not ionised by the emissions from Kr*, but impurities in the air sample (pollutants with ionisation potentials below 10.64 eV) will be ionised.

While the foregoing describes an embodiment of the present invention, the scope is determined by the appended claims.

## Claims

1. A detector to analyze compounds in gaseous sample, comprising a closed chamber (316, 318) having a helium source (318), a flow inlet fitting body (322) at one end of the chamber and an outlet fitting body (342) at the other end of said chamber to enable helium to flow through the chamber from one end to the other, spark-forming electrodes (324, 326) which are spaced apart and means (327) to provide said electrodes with a current forming a spark sufficient to arc thereacross, said spark-forming electrodes being positioned in said chamber to form a spark gap across helium flow through said chamber, means (340) downstream in said chamber from said spark-forming electrodes to inject a gaseous flow of sample into the chamber, a bias electrode (334) and a collector electrode (335) in said chamber for collection of current formed as a result of the spark across the gap wherein the helium flows toward said bias and collector electrodes to enable a current to be formed indicative of the concentration of a particular sample compound in said chamber and the bias and collector electrodes are connected to a detector means (336) to measure the concentration of the sample compound in said chamber by changing current flow, said detector also comprising a plurality of dopant gas sources (350, 352, 354, 356) and a mixer (323), arranged such that helium from said helium source and a selected one of said dopant gases are admixed prior to flowing into said chamber, the gases of said dopant gas source being neon, argon, krypton and xenon.

2. A detector according to claim 1 wherein said mixer is a manifold (323), said detector also comprising a pressure regulator (321) and valve (319) for supplying helium at a controlled rate to said manifold, said gas sources comprise a plurality of reservoirs (350, 352, 354, 356), pressure regulators (370, 372, 374, 376) and valves (360, 362, 364, 366) for supplying a selected dopant at a controlled rate to said manifold, and means (320) for introducing into said chamber said helium and said selected dopant which are commingled within said manifold thereby forming said carrier gas.

3. A detector according to claim 2 wherein said chamber (316, 328) forms an elongated helium gas flow passage and said passage directs helium flow to said electrodes (324, 326) and also directs photon emissions from said spark to interact with said one or more dopant gases to form an electrical current.

4. The detector according to any preceding claim 3 provided with an electrometer detector means (336) cooperating with a recorder (338) to quantitatively measure said current generated within the chamber (308).

5. A method of analysing compounds in a gaseous sample, comprising the steps of creating a flow of carrier gas through a chamber from one end to the other for exposure to DC current across the chamber, energising at least one component of said carrier gas to an excited metastable state as a result of exposure to said DC current, subsequently commingling a gaseous flow of sample with said carrier gas, forming charged particles in the sample as a result of ionizing radiation emitted in the decay of said excited component of said carrier gas wherein the charged particles are formed from said sample compounds, measuring said charged particles and selectively identifying compounds in said sample utilising said measurements, and selecting and supplying one gas dopant to the chamber, the DC current energising the inert gas to an excited metastable state, the dopant being energised to an excited state as a result of the decay of said metastable inert gas, and the charged particles formed as a result of ionising radiation emitted by the decay of said energised dopant component of said carrier gas in said chamber, said dopant being selected to selectively ionise compound in said sample, wherein said carrier gas is helium supplied from a helium source (318) a plurality of dopant gas sources (350, 352, 354, 356) comprising sources of neon, argon, krypton and xenon, and a mixer (323) are provided, and the helium and a selected dopant gases are admixed in said mixer before flowing into said chamber.

6. A method according to claim 5 comprising the additional step of observing spark caused emissions in said chamber to analyze said sample compounds, said observation being effected with an electrometer.

7. A method according to claim 5 or claim 6 wherein said dopant gas is selected such that the resonance energy of the dopant is greater than the ionisation energy of compounds in said sample to be measured and is less than the ionisation energy of compounds in the sample gas which are not to be measured.

8. A method according to any one of claims 5 to 7 wherein said mixer is a manifold.

**Patentansprüche**

1. Detektor zum Analysieren von Substanzen in gasförmigen Proben, umfassend eine geschlossene Kammer (316, 318) mit einer Heliumquelle (318), einem Passkörper zum Gaseinlass an einem Ende der Kammer und einem Passkörper (322) zum Gasauslass (342) am anderen Ende der Kammer, um es dem Helium zu ermöglichen, von einem Ende zum anderen durch die Kammer zu strömen, Zündelektroden (324, 326) mit einem Abstand voneinander sowie Mittel (327) zum Versorgen der Elektroden mit einem Strom, der einen Funken bildet, welcher zum Überbrücken des Abstands ausreichend ist, wobei die Zündelektroden in der Kammer angeordnet sind, um einen Funkenabstand durch den Heliumstrom in der Kammer zu bilden, Mittel (340), die sich in der Kammer unterhalb der Zündelektroden befinden, um einen gasförmigen Strom der Probe in die Kammer einzuspritzen, eine Vorspannungselektrode (334) und eine Sammelelektrode (335) in der Kammer zum Erfassen des Stroms, der als Ergebnis des Funkens über den Abstand gebildet wird, worin das Helium in Richtung der Vorspannungs- und Sammelelektrode strömt, um das Bilden eines Stroms zu ermöglichen, der die Konzentration einer bestimmten Probensubstanz in der Kammer anzeigt, und die Vorspannungs- und Sammelelektroden mit einem Erkennungsmittel (336) verbunden sind, um die Konzentration der Probensubstanz in der Kammer durch Verändern des Stromflusses zu messen, wobei der Detektor außerdem eine Vielzahl von gasförmigen Dotiersubstanzquellen (350, 352, 354, 356) und einen Mischer (323) umfasst, die so angeordnet sind, dass Helium von der Heliumquelle und ein Ausgewähltes der Dotiergase vor dem Einströmen in die Kammer zusammengemischt werden, wobei die Gase der Dotiergasquelle Neon, Argon, Krypton und Xenon sind.

2. Detektor nach Anspruch 1, wobei der Mischer eine Sammelleitung (323) ist und wobei der Detektor außerdem einen Druckregulator (321) und ein Ventil (319) umfasst, damit das Helium an die Sammelleitung mit einer kontrollierten Geschwindigkeit geliefert wird, wobei die Gasquellen eine Vielzahl von Reservebehältern (350, 352, 354, 356), Druckregulatoren (370, 372, 374, 376) und Ventilen (360, 362, 364, 366) umfassen, um ein ausgewähltes Dotiermittel mit einer kontrollierten Geschwindigkeit an die Sammelleitung zu liefern, und Mittel (320) zum Einlass des Heliums und des ausgewählten Dotiermittels, die innerhalb der Sammelleitung gemischt sind und dabei das Trägergas bilden, in die Kammer.

3. Detektor nach Anspruch 2, wobei die Kammer (316, 328) einen verlängerten Helium-Gasstrom-Durchgang bildet und der Durchgang den Heliumstrom zu den Elektroden (324, 326) leitet und auch Photonenemissionen des Funkens dazu bringt, mit einem oder mehreren Dotiergasen zusammenzuwirken, um einen elektrischen Strom zu bilden.

4. Detektor nach einem der vorhergehenden Ansprüche 1-3, ausgestattet mit einem Elektrometer-Nachweismittel (336), das mit einem Aufnahmegerät (338) zusammenarbeitet, um den in der Kammer (308) erzeugten Strom quantitativ zu messen.

5. Verfahren zum Analysieren von Substanzen in einer gasförmigen Probe, umfassend die Schritte des Erzeugens eines Stroms von Trägergas durch eine Kammer von einem Ende zum anderen zum Kontakt mit einem Gleichstrom durch die Kammer, wobei mindestens eine Substanz des Trägergases als Ergebnis des Kontaktes mit dem Gleichstrom zu einem angeregten metastabilen Zustand angeregt wird, woraufhin ein gasförmiger Strom der Probe mit dem Trägergas gemischt wird und geladene Teilchen in der Probe als Ergebnis der ionisierenden Strahlung, die beim Zerfall der angeregten Komponente des Trägergases emittiert wird, gebildet werden, wobei die geladenen Teilchen aus den Probensubstanzen gebildet werden, wobei die geladenen Teilchen gemessen werden und wobei Substanzen in der Probe unter Verwendung der Messungen selektiv identifiziert werden und wobei ein Dotiergas ausgewählt und an die Kammer geleitet wird, wobei der Gleichstrom das. Edelgas zu einem angeregten metastabilen Zustand anregt, wobei das Dotiermittel als Ergebnis des Zerfalls des metastabilen Edelgases zu einem angeregten Zustand angeregt wird und die geladenen Teilchen durch den Zerfall der angeregten Dotiermittelkomponente in der Kammer als Ergebnis ionisierender Strahlung gebildet werden, wobei das Dotiermittel ausgewählt ist, um selektiv Substanzen in der Probe zu ionisieren, wobei das Trägergas Helium aus einer Heliumquelle (318) ist, und wobei eine Vielzahl von Dotiergasquellen (350, 352, 354, 356), umfassend Quellen von Neon, Argon, Krypton und Xenon und einen Mischer (323), bereit gestellt sind, und das Helium und ausgewählte Dotiergase vor dem Einströmen in die Kammer in dem Mischer zusammengemischt werden.

6. Verfahren nach Anspruch 5, umfassend den zusätzlichen Schritt des Beobachtens der durch Funken hervorgerufenen Emissionen in der Kammer zum Analysieren der Probensubstanzen, wobei die Beobachtung mit einem Elektrometer vorgenommen wird.

7. Verfahren nach Anspruch 5 oder Anspruch 6, wobei das Dotiergas so ausgewählt ist, dass die Resonanzenergie des Dotiergases größer ist als die Ionisierungsenergie der Substanzen in der zu messenden Probe und geringer ist als die Ionisierungsenergie der Substanzen in dem Probengas, welche nicht gemessen werden sollen.

8. Verfahren nach einem der Ansprüche 5 bis 7, wobei der Mischer eine Sammelleitung ist.

**Revendications**

1. Détecteur pour analyser les composés dans l'échantillon gazeux comprenant une chambre fermée (316, 318) dotée d'une source d'hélium (318), un corps de montage d'entrée d'écoulement (322) à une extrémité de la chambre et un corps de montage de sortie (342) à l'autre extrémité de ladite chambre pour permettre à l'hélium de s'écouler à travers la chambre d'une extrémité à l'autre, des électrodes formant une étincelle (324, 326) qui sont espacées et des moyens (327) pour fournir lesdites électrodes avec un courant formant une étincelle suffisante pour projeter des étincelles en travers de celles-ci, lesdites électrodes formant une étincelle étant positionnées dans ladite chambre pour former un éclateur en travers du flux d'hélium à travers ladite chambre, des moyens (340) en aval de ladite chambre à partir desdites électrodes formant une étincelle pour injecter un flux gazeux de l'échantillon dans la chambre, une électrode polarisée (334) et une électrode collectrice (335) dans ladite chambre pour collecter le courant formé suite à l'étincelle située en travers de l'écartement dans lequel l'hélium s'écoule vers lesdites électrodes polarisée et collectrice pour permettre la formation d'un courant qui indique la concentration d'un composé d'échantillon particulier dans ladite chambre et les électrodes polarisée et collectrice sont reliées à des moyens de détecteur (336) pour mesurer la concentration du composé d'échantillon dans ladite chambre en changeant la circulation du courant,
ledit détecteur comprenant également une pluralité de sources de gaz dopant (350, 352, 354, 356) et un mélangeur (323), disposés de sorte que l'hélium provenant de ladite source d'hélium et un élément sélectionné desdits gaz dopants sont mélangés avant de s'écouler dans ladite chambre, les gaz de ladite source de gaz dopant étant du néon, de l'argon, du krypton et du xénon.

2. Détecteur selon la revendication 1 dans lequel ledit mélangeur est un collecteur (323), ledit détecteur comprenant également un régulateur de pression (321) et une vanne (319) pour fournir l'hélium à une vitesse réglée audit collecteur, lesdites sources de gaz comprennent une pluralité de réservoirs (350, 352, 354, 356), des régulateurs de pressions (370, 372, 374, 376) et des vannes (360, 362, 364, 366) pour fournir un dopant sélectionné à une vitesse réglée audit collecteur, et des moyens (320) pour introduire dans ladite chambre ledit hélium et ledit dopant sélectionné qui sont amalgamés à l'intérieur dudit collecteur formant ainsi ledit gaz porteur.

3. Détecteur selon la revendication 2 dans lequel ladite chambre (316, 328) forme un passage de flux de gaz d'hélium allongé et ledit passage dirige le flux d'hélium vers lesdites électrodes (324, 326) et dirige également les émissions de photons provenant de ladite étincelle pour interagir avec lesdits un ou plusieurs gaz dopants pour former un courant électrique.

4. Détecteur selon l'une quelconque des revendications précédant la revendication 3, fourni avec des moyens de détecteur à électromètre (336) coopérant avec un enregistreur (338) pour mesurer quantitativement ledit courant généré à l'intérieur de la chambre (308).

5. Procédé pour analyser les composés dans un échantillon gazeux, comprenant les étapes consistant à créer un flux de gaz porteur à travers une chambre d'une extrémité à l'autre pour l'exposition au courant continu en travers de la chambre, alimenter au moins un composé dudit gaz porteur vers un état métastable excité suite à l'exposition audit courant continu, amalgamer par la suite un flux gazeux de l'échantillon avec ledit gaz porteur, former des particules chargées dans l'échantillon suite au rayonnement ionisant émis dans la désintégration dudit composant excité dudit gaz porteur dans lequel les particules chargées sont formées à partir desdits composés d'échantillon, mesurer lesdites particules chargées et identifier de façon sélective les composés dans ledit échantillon en utilisant lesdites mesures, et sélectionner et fournir un gaz dopant à la chambre, le courant continu alimentant le gaz inerte à un état métastable excité, le dopant étant alimenté à un état excité suite à la désintégration dudit gaz inerte métastable et les particules chargées formées suite au rayonnement ionisant émis par la désintégration dudit composé dopant excité dudit gaz porteur dans ladite chambre, ledit dopant étant sélectionné pour ioniser de façon sélective le composé dans ledit échantillon, dans lequel ledit gaz porteur est de l'hélium fourni à partir d'une source d'hélium (318), on fournit une pluralité de sources de gaz dopant (350, 352, 354, 356) comprenant les sources de néon, d'argon, de krypton et de xénon, et un mélangeur (323) et l'hélium et les gaz dopants sélectionnés sont mélangés dans ledit mélangeur avant de s'écouler dans ladite chambre.

6. Procédé selon la revendication 5 comprenant l'étape supplémentaire consistant à observer les émissions provoquées d'étincelle dans ladite chambre pour analyser lesdits composés d'échantillon, ladite observation étant effectuée avec un électromètre.

7. Procédé selon la revendication 5 ou la revendication 6 dans lequel ledit gaz dopant est sélectionné de sorte que l'énergie de résonance du dopant est supérieure à l'énergie d'ionisation des composés dans ledit échantillon à mesurer et inférieure à l'énergie d'ionisation des composés dans le gaz d'échantillon qui ne doivent pas être mesurés.

8. Procédé selon l'une quelconque des revendications 5 à 7 dans lequel le mélangeur est un collecteur.

FIG. 1

*FIG.2*

ADJUSTMENT AND LOCK MEANS — 150

ADJUSTMENT AND LOCK MEANS — 152

110

PULSED DC SOURCE

GC COLUMN — 148

TRACE GAS SOURCE — 144

138 — TIME BASED RECORDER

136

-5 VDC    -100 VDC

He SOURCE

118

130    130    130    132 112    124    114    122    120    116    126

134    142    140 128    130

EP 0 745 846 B1

FIG.3

FIG.4

FIG.5

FIG.6

FIG.7

FIG.8

FIG.9A

FIG.9B

FIG.10  FIG.11  FIG.12

FIG.13